## Europäisches Patentamt
## European Patent Office
## Office européen des brevets

(19)

(11) Veröffentlichungsnummer: **0 094 902**
**A2**

(12) # EUROPÄISCHE PATENTANMELDUNG

(21) Anmeldenummer: **83730049.0**

(22) Anmeldetag: **13.05.83**

(51) Int. Cl.³: **H 04 L 1/24**

(30) Priorität: **14.05.82 DE 3218858**

(43) Veröffentlichungstag der Anmeldung:
**23.11.83 Patentblatt 83/47**

(84) Benannte Vertragsstaaten:
**AT BE CH DE FR GB IT LI NL**

(71) Anmelder: **Heinrich-Hertz-Institut für Nachrichtentechnik Berlin GmbH Einsteinufer 37 D-1000 Berlin 10(DE)**

(72) Erfinder: **Hermes, Thomas, Dr.-Ing. Helmholtzstrasse 26 D-1000 Berlin 10(DE)**

(74) Vertreter: **Wolff, Konrad Heinrich-Hertz-Institut für Nachrichtentechnik Berlin GmbH Einsteinufer 37 D-1000 Berlin 10(DE)**

(54) **Verfahren zum Lokalisieren von Fehlerquellen in digitalen Systemen und Scrambler/Descrambler zur Ausführung des Verfahrens.**

(57) In digitalen Anlagen, z.B. Netzen, und Einrichtungen, z.B. Verstärkern, Repeatern, Koppelfeldern und dergleichen, sollen für Untersuchungen und auch zur laufenden Überwachung Fehlerquellen begrenzter Fehlerhäufigkeit, also keine Totalausfälle, frühzeitig erkannt und geortet werden. Nach dem erfindungsgemäßen Vorschlag werden mit Hilfe von Scramblern SCi / Descramblern DSCi zunächst von diesen begrenzte Subsysteme i gebildet. Infolge unterschiedlicher Beschaltung der einzelnen Scrambler/Descrambler-Paare verwürfeln diese die digitalen Daten nach einem für das betreffende Subsystem typischen Muster. Am Ausgang des letzten Subsystems wird das ankommende Testsignal geprüft. Als Testsignale kommen feste Muster, durch PROM-Schaltwerke bestimmte oder Pseudo-Random Datenmuster sowie insbesondere ein leerer Zeitmultiplex-Kanal in Betracht. Treten in Subsystemen bitverfälschende Fehler auf, werden diese vom betreffenden Descrambler DSCi auf seine ihm eigentümliche Art vervielfältigt. Es entstehen also jeweils für ein Subsystem typische Abweichungsmuster. Am Empfangsort werden die Abweichungsmuster registriert, dargestellt und ausgewertet. Hierfür können entsprechend programmierte Geräte eingesetzt werden.

Fig.1

Heinrich-Hertz-Institut für Nachrichtentechnik Berlin
GmbH                                        12/0582 EP


Verfahren zum Lokalisieren von Fehlerquellen in digitalen Systemen und Scrambler/Descrambler zur Ausführung des Verfahrens


Die Erfindung bezieht sich auf ein Verfahren zum Lokalisieren von Fehlerquellen begrenzter Fehlerhäufigkeit mit Hilfe von Scramblern/Descramblern in Anlagen und Einrichtungen digitaler Systeme sowie auf Scrambler/Descrambler zur Ausführung des Verfahrens. Bei Systemen, die einen Totalausfall, z.B. wegen Kabelbruchs, Ausfalls eines Verstärkers, Repeaters oder dergleichen, aufweisen, kann und soll die Erfindung nicht zur Anwendung kommen. Sie setzt ein betriebsfähiges System voraus und eignet sich deshalb insbesondere für die Untersuchung und laufende Überwachung.


Zum Nachweis, daß die geforderte Qualität eines Übertragungssystems für digitale Signale eingehalten wird, sind Fehlerratenmessungen bekannt und üblich. Mit $10^{-9}$ Fehlern pro übertragenes Bit werden im allgemeinen diese Qualitätsanforderungen erfüllt. Bei weiten Strecken sollen im Hinblick auf die Einhaltung dieser Fehlerrate beim gesamten System die einzelnen Abschnitte noch höhere Qualitätsanforderungen, beispielsweise eine Fehlerrate von nur $10^{-10}$ Fehler pro übertragenes Bit, erfüllen (siehe z.B. DE-PS 29 25 761, Spalte 2, Zeilen 14 bis 21). Eine entsprechende, derartige Steigerung der Zuverlässigkeit und Unempfindlichkeit gegen Störeinflüsse bei den Bauteilen und anderen Komponenten, die in solchen Übertragungssystemen für weite Strecken eingesetzt werden können, ist selbstverständlich mit einem beachtlichen technischen und wirtschaftlichen Mehraufwand verbunden.

Es kann wohl unterstellt werden, daß solche Maßnahmen auf der Annahme beruhen, jedes auftretende Fehlerereignis - im Rahmen der zulässigen Fehlerrate - sei als solches hinzunehmen und man habe sich entsprechend darauf einzurichten. Dies trifft jedoch in dieser Schärfe nicht zu. Eine beachtliche Anzahl von Fehlerereignissen, beispielsweise solche, die durch Alterungserscheinungen hervorgerufen werden, zeichnet sich frühzeitig und allmählich ab. Wird dies erkannt, bevor die Fehler das zulässige Maß überschreiten, kann auch rechtzeitig Abhilfe geschaffen werden. Dazu reicht aber eine globale Fehlerratenmessung allein nicht aus.

Die Fehlerortung ist die Voraussetzung dafür, eine Diagnose mit den dem Einzelfall entsprechenden, angemessenen Maßnahmen zu treffen. Je genauer eine Fehlerquelle lokalisiert werden kann, desto genauer lassen sich Rückschlüsse auf die Ursachen ziehen.

In digitalen Übertragungs- und Vermittlungssystemen ist das Vorhandensein einer Fehlerquelle verhältnismäßig leicht an Veränderungen zu erkennen, die empfangene Daten gegenüber den betreffenden ausgesendeten Daten aufweisen bzw. daran, daß die empfangenen Daten keinen Sinn erkennen lassen. Hiervon zu unterscheiden sind gewollte Veränderungen digitaler Daten mit Scramblern/Descramblern, die in digitalen Übertragungs-Systemen vor allem dazu dienen, längere Nullfolgen oder dergleichen zu vermeiden, d.h. genügend viele Flankenwechsel zu gewährleisten. Die auszusendenden Daten werden dazu im Scramber nach einer bestimmten Vorschrift verändert, d.h. umgewandelt. Hardwaremäßig läßt sich eine solche Vorschrift z.B. durch eine entsprechende Beschaltung von Abgriffen eines Schieberegisters realisieren. Im Descrambler findet der zum Scrambler reziproke Vorgang, also die Rückumwandlung, statt.

Sind zwischen Scrambler und Descrambler keine Fehlerquellen vorhanden, weisen die Signale vor dem Scrambler und hinter dem Descrambler gleiche Gestalt auf. Eine Veränderung eines bit in der Datenfolge zwischen Scrambler und Descrambler infolge einer dort vorhandenen Fehlerquelle bewirkt hingegen - je nach gewählter Scrambler/Descrambler-Beschaltung - eine mehr oder weniger große Anzahl veränderter, d.h. verfälschter bits hinter dem Descrambler, also eine Vervielfachung des Fehlers. Bei digitalen Übermittlungs-Systemen mit mehreren aufeinanderfolgenden Scrambler/Descrambler-Strecken unterliegt ein einmal verfälschtes bit, wie ein unverfälschtes, natürlich nur den gewollten Umwandlungen durch die Scrambler und Descrambler der nachfolgenden Strecken.

Der Erfindung liegt die Aufgabe zugrunde, die sich in digitalen Systemen z.B. durch Alterungserscheinungen von Bauelementen abzeichnenden, durch äußere Einflüsse, z.B. Temperaturschwankungen, auftretenden sowie konstruktions- oder systembedingten Fehlerquellen begrenzter Fehlerhäufigkeit oder dergleichen frühzeitig zu erkennen und möglichst genau zu lokalisieren. Unter digitalen Systemen sind dabei nicht nur Übermittlungssysteme, sondern auch Anordnungen und Einrichtungen von Komponenten, Baugruppen oder Bauteilen für digitale Daten zu verstehen. Die erfindungsgemäße Lösung hierfür ist dadurch gekennzeichnet, daß:

- von jeweils einem Scrambler und einem Descrambler begrenzte Subsysteme gebildet,
- den Scramblern/Descramblern der einzelnen Subsysteme jeweils eine eigene Vorschrift für das Verwürfeln der digitalen Daten zugeordnet und

- am Ausgang des letzten Subsystems ein dort ankommendes Testsignal mit dem Muster des ursprünglichen, am Eingang des ersten Subsystems zugeführten Testsignals verglichen werden, wodurch sich im ankommenden Testsignal im Falle vorhandener Fehlerquellen unterschiedliche, von den Verwürfelungsvorschriften in den betreffenden Subsystemen abhängige, auswertbare Fehlerstrukturen ergeben.

Der für die Erfindung entscheidende Gedanke ist darin zu sehen, daß das oben erwähnte, infolge einer vorhandenen Fehlerquelle auftretende eigentümliche Ansteigen der Fehlerraten als vorteilhafte Erscheinung ausgenutzt werden kann. Während bei herkömmlichen digitalen Übermittlungs-Systemen mit mehreren aufeinanderfolgenden Scrambler/Descrambler-Strecken aus anderen, verständlichen Gründen möglichst alle Scrambler/Descrambler nach derselben Vorschrift arbeiten und für solche Scrambler/Descrambler-Strecken damit keine eigentümlichen Fehlerstrukturen beim Empfänger erscheinen können und sich deshalb auch nicht über die Tatsache einer angestiegenen Fehlerrate hinaus auswerten lassen, werden diese Verhältnisse bei der erfindungsgemäßen Lösung praktisch in ihr - vorteilhaftes - Gegenteil umgekehrt. Ist z.B. nur eine einzige Fehlerquelle im gesamten Übermittlungs-System vorhanden, setzen sich die hinter dem zugehörigen Descrambler erscheinenden Bitfehler - abgesehen von den internen, völlig unschädlichen Umwandlungen in den nachfolgenden Subsystemen - unverändert fort. Aufgrund der für jedes Subsystem charakteristischen Fehlerstruktur kann dann nicht nur auf das Vorhandensein einer Fehlerquelle, sondern auch auf das betreffende Subsystem mit dieser Fehlerquelle geschlossen werden, bei geringen Fehlerraten selbst dann, wenn nur ein einziger oder ein Teil der Zeitmultiplexkanäle eines Übermittlungssystems mit dem Testmuster beaufschlagt und anschließend geprüft wird, solange die Fehlerstruktur in den Kanal bzw. die Kanäle fällt. Bei einer Fehlerquelle in einem anderen Subsystem sind infolge der unterschiedlichen Verwürfelungsvorschriften in jedem Subsystem die betreffenden Bitfehlergruppen unterschiedlich. Der Fall, daß zwei oder mehr Fehlerereignisse in verschiedenen Subsystemen gleichzeitig auftreten und nicht auswertbare Fehlermuster entstehen, ist bei den üblichen, vernünftigen Fehlerraten, die zugelassen sind, in höchstem Maße unwahrscheinlich. Dies gilt entsprechend für jede Fehlerquelle in jedem anderen Subsystem. Die Auswertung am Ende des letzten Subsystems kann schnell und einfach mit entsprechend ausgerüsteten, insbesondere mit programmierten Geräten automatisch erfolgen.

Für die Auswertung muß am Empfangsort das ausgesendete Testsignal selbstverständlich bekannt sein, um den erforderlichen Vergleich durchführen zu können. Außer der Möglichkeit, das Testsignal am Empfangsort zu regenerieren, kann dieses auch bereits vorab beim Empfänger hinterlegt sein. Eine besonders vorteilhafte Ausführungsform der Erfindung ist dadurch gekennzeichnet, daß als Testsignal ein leerer Zeitmultiplex-Kanal geprüft wird. Das heißt, bei solchen Ausführungsformen der Erfindung ist kein Testsignalsender erforderlich. Das Erkennen des Musters eines leeren Zeitmultiplex-Kanals ist trivial und führt damit auch auf der Empfänger- / Auswerteseite zu geringerem schaltungstechnischen Aufwand.

Selbstverständlich hängen Umfang und Häufigkeit derartiger Fehlerortungen z.B. von den jeweiligen Anforderungen an die Betriebssicherheit sowie vielen spezifischen Randbedingungen für die verschiedenartigsten digitalen Systeme ab. Aufgrund der hier aufgezeigten Lösungen sollte es möglich sein, für solche Sonderfälle die erforderlichen Maßnahmen zu treffen. In diesem Zusammenhang ist z.B. zu erwähnen, daß es sinnvoll und zweckmäßig ist, in Abhängigkeit von der erforderlichen Anzahl benötigter Scrambler/Descrambler-Muster eine Mindestbreite für das Testsignal, beispielsweise mindestens zwei benachbarte Zeitmultiplex-Kanäle zu je 8 bit zu verwenden oder auch der Organisation des Zeitmultiplexrahmens entsprechend die Kanäle für das Testsignal zu wechseln.

Zur Ausführung des erfindungsgemäßen Verfahrens sind bekannte und übliche Scrambler/Descrambler im Prinzip geeignet, wenn diese allerdings nach unterschiedlichen Verwürfelungsvorschriften arbeiten können. Dies ist auf sehr einfache Weise möglich, indem - wie bereits weiter vorn schon erwähnt - die einzelnen Scrambler/-Descrambler-Paare unterschieldich beschaltet werden. Besonders vorteilhaft für die Erfindung sind jedoch solche Scrambler/Descrambler, die eine wahl- und paarweise einstellbare Ausbildung von Beschaltungsarten für mehrere Verwürfelungsmuster aufweisen sowie solche, die über eine Ausbildung der Beschaltungsarten in mehreren Klassen, die jeweils für gleichartige Fehlerursachen vorgesehen sind, verfügen. Hierdurch werden größere Stückzahlen von Scramblern/Descramblern völlig einheitlichen Typs und damit auch eine problemlose Austauschbarkeit ermöglicht. Klassen von Beschaltungsarten erlauben beispielsweise die Unterscheidung zwischen Fehlerereignissen geringerer und größerer Tragweite, also auch eine Beurteilung der Dringlichkeit, mit der eine festgestellte und geortete Fehlerquelle beseitigt werden muß.

Im Zusammenhang mit der Zeichnung wird nachfolgend eine schematische Ausführungsform der Erfindung erläutert. Dabei zeigen:

Fig. 1: ein Blockschaltbild eines digitalen Übermittlungs-Systems mit Scrambler/Descrambler-Subsystemen

und Fig. 2: ein Schaubild für die Beschaltung von Abgriffen eines Descramblers.

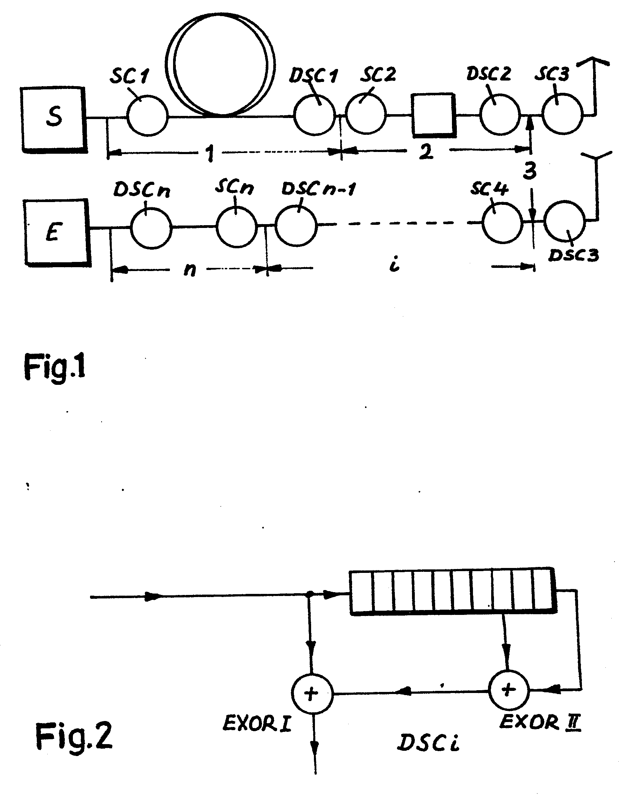

Bei dem in Fig. 1 dargestellten System kann es sich um eine sehr weiträumige digitale Anlage, z.B. ein Weitverkehrsnetz, oder auch um ein digitales Gerät oder jede denkbare Zwischengröße handeln. Ein Sender S sendet ein Testsignal aus, das über die sich aneinander anschließenden Subsysteme 1, 2, ..., n zu einem Empfänger E gelangt, wo es ausgewertet wird.

Jedes Subsystem 1, 2, ..., n ist von einem Scrambler SCi und einem zugehörigen Descrambler DSCi, i = 1, ..., n, begrenzt. Subsysteme i können Übertragungsstrecken, insbesondere Lichtwellenleiterstrecken, Verstärker, Repeater, Koppelfelder - beim Subsystem 2 durch einen Block symbolisiert - sein.

Als Testsignale kommen sowohl feste Muster als auch durch PROM-Schaltwerke bestimmte oder Pseudo-Random Datenmuster in Betracht. Insbesondere kann auch ein leerer Zeitmultiplex-Kanal verwendet werden, d.h. der Sender S für das Testsignal kann entfallen.

Die einzelnen Scrambler SCi verwürfeln das bei ihnen ankommende Gesamtsignal, und die Descrambler DSCi stellen - soweit in einem Subsystem i keine Fehlerquelle vorhanden ist, die eine Bitverfälschung hervorruft - wieder das Original her. Tritt in einem Subsystem i zwischen dem Scrambler SCi und dem Descrambler DSCi ein bitverfälschender Fehler auf, vervielfältigt der Descrambler DSCi diesen Fehler in an sich bekannter Weise, jedoch auf eine - nur ihm - eigentümliche Art, abhängig von seiner Beschaltung.

Beim Empfänger E werden die dort ankommenden Datenmuster geprüft und mit den vom Sender S - oder dem eines leeren Zeitmultiplex-Kanals - verglichen und festgestellte Abweichungen registriert und dargestellt sowie gegebenenfalls automatisch ausgewertet. Da die einzelnen Paare von Scramblern SCi und Descramblern DSCi auf unterschiedliche Art beschaltet sind und damit für die einzelnen Kombinationen durch die Fehlervervielfältigung typische Abweichungsmuster bilden, läßt sich aus den Mustern der Abweichung bei Einzelfehlern auf dasjenige Subsystem schließen, in dem der Fehler entstanden ist. Die Scrambler/Descrambler können bei bevorzugten Ausführungsformen der Erfindung auch für mehrere oder alle vorkommenden Beschaltungsarten ausgebildet und wahl- sowie paarweise auf eine dieser Beschaltungsarten einstellbar sein. Außerdem lassen sich vorteilhaft auch Klassen bestimmter Beschaltungsarten für gleichartige, vermutlich in mehreren Subsystemen auftretende Fehlerursachen bilden.

Anhand der Fig. 2 ist für einen Descrambler DSCi die Wirkungsweise der Fehlervervielfältigung mit einem typischen Muster infolge der Beschaltung zu erkennen. Tritt zum Zeitpunkt $t_x$ ein Bitfehler auf, gelangt dieser sowohl in ein Schieberregister als auch an das EX OR-Gatter I und von dort erstmals zum Ausgang. Zum Zeitpunkt $t_{x+8}$ gelangt derselbe Bitfehler über den eingezeichneten Abgriff an der betreffenden Speicherzelle des Schieberegisters an das EX OR-Gatter II, sodann an das EX OR-Gatter I und von dort das zweitemal
und schließlich vom Ende des Schieberegisters her zum
Zeitpunkt $t_{x+10}$ an das EX OR-Gatter II und dann über
das EX OR-Gatter I ein drittes Mal auf den Ausgang.
Durch unterschiedliche Beschaltungen/Rückkopplungen
an verschiedenen Descramblern DSCi entstehen dementsprechend unterschiedliche Abweichungsmuster.

Hieraus ist auch erkennbar, daß eine bestimmte Mindestbreite im Zeitmultiplexrahmen eines Übermittlungssystems benötigt wird, um das Abweichungsmuster prüfen
zu können. Eine Bitverfälschung, die zum Ende eines
Zeitmultiplexkanals auftritt, kann unter Umständen
nicht mehr vollständig auswertbar sein. Dies wäre aber
auch nicht weiter schädlich.

Die vorstehenden Erläuterungen befassen sich im wesentlichen mit den Erscheinungen bei seriellen Bitströmen im System zur Übertragung und/oder Vermittlung, allgemein zur Übermittlung von digitalen Signalen. Die Erfindung ist aber darauf nicht beschränkt.
Von ihr werden insbesondere auch parallel arbeitende
Systeme erfaßt. Dies ist deshalb von besonderer Bedeutung, weil häufig auch Parallelschnittstellen direkt
zu bedienen sind. Derartige Einheiten arbeiten zudem
mit, entsprechend dem Parallelisierungsgrad, niedrigeren Taktraten. Weitere Einzelheiten hierzu werden beispielsweise einer zur Veröffentlichung in "Elektronik"
angenommenen Arbeit (Hermes, Th.; Hoen, B.: "Parallel
arbeitende Scrambler, Descrambler und Zufallsgeneratoren") zu entnehmen sein. Selbstverständlich ist auch
eine gemischt parallele/serielle Bearbeitung der Datenströme möglich.

Heinrich-Hertz-Institut für Nachrichtentechnik Berlin
GmbH                                          12/0582 EP

Patentansprüche

1. Verfahren zum Lokalisieren von Fehlerquellen begrenzter Fehlerhäufigkeit mit Hilfe von Scramblern/
Descramblern in Anlagen und Einrichtungen digitaler
Systeme,
d a d u r c h   g e k e n n z e i c h n e t ,   daß
- von jeweils einem Scrambler und einem Descrambler
  begrenzte Subsysteme gebildet,
- den Scramblern/Descramblern der einzelnen Subsysteme
  jeweils eine eigene Vorschrift für das Verwürfeln
  der digitalen Daten zugeordnet und
- am Ausgang des letzten Subsystems ein dort ankommendes Testsignal mit dem Muster des ursprünglichen, am
  Eingang des ersten Subsystems zugeführten Testsignals verglichen
werden, wodurch sich im ankommenden Testsignal im Falle vorhandener Fehlerquellen unterschiedliche, von den
Verwürfelungsvorschriften in den betreffenden Subsystemen abhängige, auswertbare Fehlerstrukturen ergeben.

2. Verfahren nach Anspruch 1,
d a d u r c h   g e k e n n z e i c h n e t ,   daß
als Testsignal ein leerer Zeitmultiplex-Kanal geprüft wird.

3. Verfahren nach Anspruch 1 oder 2,
d a d u r c h   g e k e n n z e i c h n e t ,   daß
für das Testsignal mindestens zwei benachbarte Zeitmultiplex-Kanäle zu je 8 bit verwendet werden.

4. Verfahren nach einem der Ansprüche 1 bis 3,
d a d u r c h   g e k e n n z e i c h n e t ,   daß
der Organisation des Zeitmultiplexrahmens entsprechend
die Kanäle für das Testsignal gewechselt werden.

5. Scrambler/Descrambler zur Ausführung des Verfahrens nach einem der Ansprüche 1 bis 4,
g e k e n n z e i c h n e t   d u r c h
eine wahl- und paarweise einstellbare Ausbildung von Beschaltungsarten für mehrere Verwürfelungsmuster.

6. Scrambler/Decrambler nach Anspruch 5,
g e k e n n z e i c h n e t   d u r c h
eine Ausbildung der Beschaltungsarten in mehreren Klassen, die jeweils für gleichartige Fehlerursachen vorgesehen sind.

0094902

**Fig.1**

**Fig.2**